# EUROPEAN PATENT APPLICATION

(11) **EP 4 703 154 A1**
(43) Date of publication of application: **04.03.2026**
(21) Application number: 25191553.4
(22) Date of filing: 24.07.2025
(51) Int. Cl.: B60C 11/03, B60C 11/12, B60C 11/13

(54) **TIRE**

(30) Priority: 26.08.2024 JP 2024144546
(71) Applicant: Sumitomo Rubber Industries, Ltd., Kobe-shi, Hyogo 651-0072 (JP)
(72) Inventor: ITO, Shuhei, Kobe-shi, 651-0072 (JP)
(74) Representative: Manitz Finsterwald Patent- und Rechtsanwaltspartnerschaft mbB

(57) **Abstract**

The present invention is a tire 1 including a tread portion 2. The tread portion 2 has circumferential grooves 3 extending in a tire circumferential direction, and land portions 4 demarcated by the circumferential grooves 3. The circumferential groove 3 includes a narrow groove portion 3a having a small groove width on an outer side in a tire radial direction, and a wide portion 3b in which the groove width is great, on a side inward of the narrow groove portion 3a in the tire radial direction. The land portions 4 include a first land portion 4A and a second land portion 4B disposed inward of the first land portion 4A in the tire axial direction. The first land portion 4A and the second land portion 4B each have a plurality of sipes 5 extending across the first land portion 4A and the second land portion 4B, respectively. A maximum pitch P2 in the tire circumferential direction between the sipes 5 adjacent to each other in the tire circumferential direction in the second land portion 4B is less than a maximum pitch P1 in the tire circumferential direction between the sipes 5 adjacent to each other in the tire circumferential direction in the first land portion 4A.

## Description

### BACKGROUND OF THE INVENTION

### Field of the Invention

The present invention relates to a tire having a tread portion.

### Background Art

To date, a tire having a tread portion that allows achievement of both rolling resistance performance and wet performance, has been known. For example, Japanese Laid-Open Patent Publication No. 2023-071453 suggests a tire which includes a sipe extending in the tire axial direction and a wide groove portion disposed inward of the sipe in the tire radial direction so as to extend in the tire axial direction with a width greater than a width of the sipe.

However, even the tire disclosed in Japanese Laid-Open Patent Publication No. 2023-071453 is expected to have enhanced rolling resistance performance year by year, and is also required to have enhanced wear resistance.

The present invention has been made in view of the aforementioned circumstances, and a main object of the present invention is to provide a tire which can enhance wear resistance while maintaining good rolling resistance performance and wet performance.

### SUMMARY OF THE INVENTION

The present invention is directed to a tire including a tread portion, the tread portion has a plurality of circumferential grooves extending in a tire circumferential direction, and a plurality of land portions demarcated by the plurality of circumferential grooves, at least one of the plurality of circumferential grooves includes a narrow groove portion having a small groove width on an outer side in a tire radial direction, and a wide portion in which the groove width is great, on a side inward of the narrow groove portion in the tire radial direction, the plurality of land portions include a first land portion disposed on an outermost side in a tire axial direction, and a second land portion disposed inward of the first land portion in the tire axial direction, the first land portion and the second land portion each have a plurality of sipes extending across the first land portion and the second land portion, respectively, and a maximum pitch in the tire circumferential direction between the sipes adjacent to each other in the tire circumferential direction in the second land portion is less than a maximum pitch in the tire circumferential direction between the sipes adjacent to each other in the tire circumferential direction in the first land portion.

The tire of the present invention has the above-described configuration, and can thus enhance wear resistance while maintaining good rolling resistance performance and wet performance.

### BRIEF DESCRIPTION OF THE DRAWINGS

FIG. 1 is a development of a tread portion of a tire according to one embodiment of the present invention;
FIG. 2 is a cross-sectional view taken along a line A-A in FIG. 1;
FIG. 3 is a development of a tread portion according to another embodiment;
FIG. 4 is a cross-sectional view of a circumferential groove according to a second embodiment; and
FIG. 5 is a cross-sectional view of a circumferential groove according to a third embodiment.

### DETAILED DESCRIPTION

One embodiment of the present invention will be described below in detail with reference to the drawings.

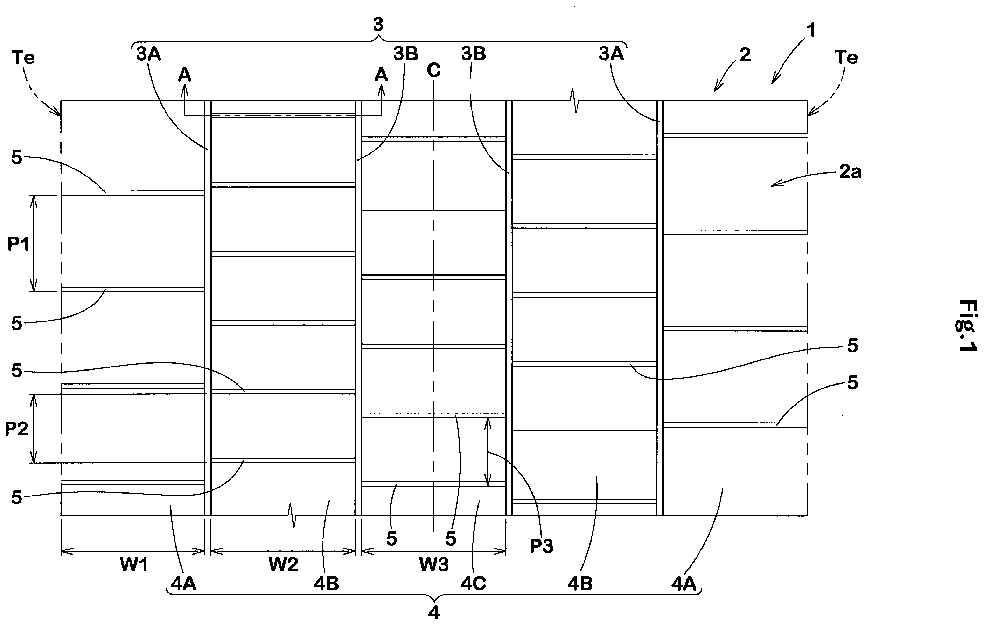

FIG. 1 is a tread development of a tread portion 2 of a tire 1 according to the present embodiment. As shown in FIG. 1, the tire 1 of the present embodiment has the tread portion 2. Preferable examples of the tire 1 include a heavy duty pneumatic tire. However, the tire 1 is not limited thereto, and is applicable to various tires 1 such as a pneumatic tire for a passenger car, an airless tire, and a tire for an industrial machine.

The tread portion 2 of the present embodiment has a plurality of circumferential grooves 3 extending in the tire circumferential direction, and a plurality of land portions 4 demarcated by the plurality of circumferential grooves 3. The tread portion 2 having such a configuration can inhibit deformation of the land portion 4 during contact with the ground, and contributes to enhancement of rolling resistance performance and wear resistance of the tire 1.

In the present embodiment, the plurality of circumferential grooves 3 include a first circumferential groove 3A disposed on the outer side in the tire axial direction and a second circumferential groove 3B disposed inward of the first circumferential groove 3A in the tire axial direction. The plurality of circumferential grooves 3 include, for example, a pair of the first circumferential grooves 3A disposed across the tire equator C and a pair of the second circumferential grooves 3B disposed across the tire equator C.

The "tire equator C" refers to the center position between a pair of tread ends Te in the tire axial direction on a ground contact surface 2a. The "tread end Te" refers to an outermost ground contact position in the tire axial direction in a state where a standardized load is applied to the tire 1 in a standardized state and the tire 1 is brought into contact with a plane at a camber angle of 0° when the tire 1 is a heavy duty pneumatic tire.

In a case where the tire 1 is a pneumatic tire, the "standardized state" refers to a state where the tire 1 is mounted on a standardized rim and adjusted to have a standardized internal pressure, and no load is applied to the tire 1. Hereinafter, unless otherwise specified, dimensions and the like of components of the tire 1 are represented by values measured in the standardized state.

In a case where a standard system including a standard on which the tire 1 is based is provided, the "standardized rim" represents a rim defined for each tire by the standard. Examples of the standardized rim include the "standard rim" in the JATMA standard, the "Design Rim" in the TRA standard, and the "Measuring Rim" in the ETRTO standard. In a case where a standard system including a standard on which the tire 1 is based is not provided, the "standardized rim" represents a rim which has the smallest rim width among rims on which the tire 1 can be mounted and which do not cause air leakage and have the smallest rim diameter.

In a case where a standard system including a standard on which the tire 1 is based is provided, the "standardized internal pressure" represents an air pressure defined for each tire by the standard. Examples of the standardized internal pressure include the "maximum air pressure" in the JATMA standard, the maximum value recited in the table "TIRE LOAD LIMITS AT VARIOUS COLD INFLATION PRESSURES" in the TRA standard, and the "INFLATION PRESSURE" in the ETRTO standard. In a case where a standard system including a standard on which the tire 1 is based is not provided, the "standardized internal pressure" represents an air pressure defined for each tire by a manufacturer or the like.

In a case where a standard system including a standard on which the tire 1 is based is provided, the "standardized load" represents a load defined for each tire by the standard. Examples of the standardized load include the "maximum load capacity" in the JATMA standard, the maximum value recited in the table "TIRE LOAD LIMITS AT VARIOUS COLD INFLATION PRESSURES" in the TRA standard, and the "LOAD CAPACITY" in the ETRTO standard. In a case where a standard system including a standard on which the tire 1 is based is not provided, the "standardized load" represents a load defined for each tire by a manufacturer or the like as the maximum load that is applicable when the tire 1 is used.

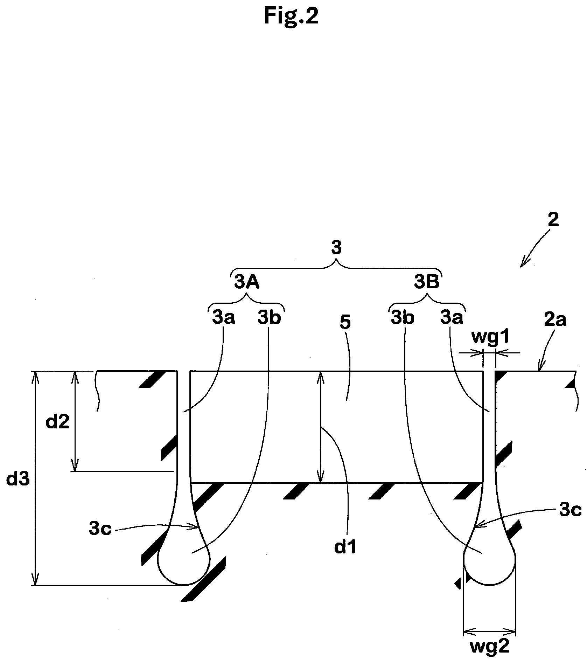

FIG. 2 is a cross-sectional view taken along a line A-A in FIG. 1. As shown in FIG. 2, in the present embodiment, at least one of the plurality of circumferential grooves 3 includes a narrow groove portion 3a having a small groove width on the outer side in the tire radial direction, and a wide portion 3b having a great groove width on the side inward of the narrow groove portion 3a in the tire radial direction.

The circumferential groove 3 having such a configuration allows the land portions 4 adjacent to the narrow groove portion 3a to come into contact with each other when a load is applied, and can thus inhibit deformation of the land portions 4 during contact with the ground, so that rolling resistance performance and wear resistance of the tire 1 can be enhanced. Furthermore, since the groove width of the wide portion 3b is increased at the late stage of wear, the wide portion 3b inhibits degradation of drainage performance at the late stage of wear and contributes to enhancement of wet performance of the tire 1.

FIG. 2 shows an example in which each of the first circumferential groove 3A and the second circumferential groove 3B includes the narrow groove portion 3a and the wide portion 3b. However, the present invention is not limited thereto. For example, only the second circumferential groove 3B may include the narrow groove portion 3a and the wide portion 3b. In this case, for example, the first circumferential groove 3A may be opened with the maximum groove width wg2 of the wide portion 3b up to the ground contact surface 2a.

As shown in FIG. 1, in the present embodiment, the plurality of land portions 4 include a first land portion 4A disposed on the outermost side in the tire axial direction, and a second land portion 4B disposed inward of the first land portion 4A in the tire axial direction. For example, the plurality of land portions 4 include a third land portion 4C disposed inward of the second land portion 4B in the tire axial direction.

In the present embodiment, the first land portion 4A is demarcated between the tread end Te and the first circumferential groove 3A. The second land portion 4B is preferably demarcated between the first circumferential groove 3A and the second circumferential groove 3B. For example, the third land portion 4C is demarcated between the pair of the second circumferential grooves 3B, and disposed on the tire equator C.

Thus, FIG. 1 shows an example in which the four circumferential grooves 3 and the five land portions 4 are disposed. However, the tread portion 2 is not limited to such a configuration. For example, the tread portion 2 may have two circumferential grooves 3 and three land portions 4, may have three circumferential grooves 3 and four land portions 4, or may have five or more circumferential grooves 3 and six or more land portions 4.

In the present embodiment, the first land portion 4A, the second land portion 4B, and the third land portion 4C each have a plurality of sipes 5 extending across the first land portion 4A, the second land portion 4B, and the third land portion 4C, respectively. The sipe 5 having such a configuration allows drainage to be performed through the circumferential groove 3, and allows wet performance of the tire 1 to be enhanced. The sipe 5 refers to a cut portion having a width of less than 1.0 mm in the direction orthogonal to the sipe longitudinal direction, and is clearly distinguished from a groove having a groove width of 1.0 mm or more.

The maximum pitch P2 in the tire circumferential direction between the sipes 5 adjacent to each other in the tire circumferential direction in the second land portion 4B is preferably less than the maximum pitch P1 in the tire circumferential direction between the sipes 5 adjacent to each other in the tire circumferential direction in the first land portion 4A.

The land portions 4 having such a configuration allow drainage to be more effectively performed since the density of the sipes 5 is high in the second land portion 4B in which the ground contact pressure is high, so that wet performance of the tire 1 can be enhanced. In the first land portion 4A, the density of the sipes 5 is low, and high stiffness can be maintained, so that wear resistance of the tire 1 can be enhanced. Therefore, the tire 1 of the present embodiment can enhance wear resistance while maintaining good rolling resistance performance and wet performance.

In a more preferable mode, the maximum pitch P3 in the tire circumferential direction between the sipes 5 adjacent to each other in the tire circumferential direction in the third land portion 4C is equal to the maximum pitch P2 in the second land portion 4B. In this case, the third land portion 4C is not distinguished from the second land portion 4B, and may be included in the second land portion 4B. The land portions 4 having such a configuration allow the third land portion 4C to maintain high stiffness, and can further enhance wear resistance of the tire 1.

For example, the maximum pitch P3 in the third land portion 4C may be less than the maximum pitch P2 in the second land portion 4B. The land portions 4 having such a configuration can enhance drainage performance in the third land portion 4C in which the ground contact pressure is highest, and can further enhance wet performance of the tire 1.

The maximum width W1 of the first land portion 4A in the tire axial direction is preferably 1.0 or more times the maximum pitch P1 in the first land portion 4A. In a case where the maximum width W1 of the first land portion 4A is 1.0 or more times the maximum pitch P1 in the first land portion 4A, the density of the sipes 5 in the first land portion 4A can be enhanced, and wet performance of the tire 1 can be enhanced. From such a viewpoint, the maximum width W1 of the first land portion 4A is more preferably 1.5 or more times the maximum pitch P1 in the first land portion 4A.

The maximum width W1 of the first land portion 4A is preferably 3.0 or less times the maximum pitch P1 in the first land portion 4A. In a case where the maximum width W1 of the first land portion 4A is 3.0 or less times the maximum pitch P1 in the first land portion 4A, stiffness of the first land portion 4A can be enhanced, and wear resistance of the tire 1 can be enhanced. From such a viewpoint, the maximum width W1 of the first land portion 4A is more preferably 2.5 or less times the maximum pitch P1 in the first land portion 4A.

Thus, the maximum width W1 of the first land portion 4A is preferably 1.0 to 3.0 times the maximum pitch P1 in the first land portion 4A and more preferably 1.5 to 2.5 times the maximum pitch P1. Combination of the upper limit value and the lower limit value in these numerical value ranges can be discretionarily selected.

The maximum width W2 of the second land portion 4B in the tire axial direction is preferably 1.4 or more times the maximum pitch P2 in the second land portion 4B. In a case where the maximum width W2 of the second land portion 4B is 1.4 or more times the maximum pitch P2 in the second land portion 4B, the density of the sipes 5 in the second land portion 4B can be enhanced, and wet performance of the tire 1 can be enhanced. From such a viewpoint, the maximum width W2 of the second land portion 4B is more preferably 1.5 or more times the maximum pitch P2 in the second land portion 4B.

The maximum width W2 of the second land portion 4B is preferably 3.0 or less times the maximum pitch P2 in the second land portion 4B. In a case where the maximum width W2 of the second land portion 4B is 3.0 or less times the maximum pitch P2 in the second land portion 4B, stiffness of the second land portion 4B can be enhanced, and wear resistance of the tire 1 can be enhanced. From such a viewpoint, the maximum width W2 of the second land portion 4B is more preferably 2.5 or less times the maximum pitch P2 in the second land portion 4B.

Thus, the maximum width W2 of the second land portion 4B is preferably 1.4 to 3.0 times the maximum pitch P2 in the second land portion 4B and more preferably 1.5 to 2.5 times the maximum pitch P2. Combination of the upper limit value and the lower limit value in these numerical value ranges can be discretionarily selected.

The maximum width W3 of the third land portion 4C in the tire axial direction is preferably 1.4 or more times the maximum pitch P3 in the third land portion 4C. In a case where the maximum width W3 of the third land portion 4C is 1.4 or more times the maximum pitch P3 in the third land portion 4C, the density of the sipes 5 in the third land portion 4C can be enhanced, and wet performance of the tire 1 can be enhanced. From such a viewpoint, the maximum width W3 of the third land portion 4C is more preferably 1.5 or more times the maximum pitch P3 in the third land portion 4C.

The maximum width W3 of the third land portion 4C is preferably 3.0 or less times the maximum pitch P3 in the third land portion 4C. In a case where the maximum width W3 of the third land portion 4C is 3.0 or less times the maximum pitch P3 in the third land portion 4C, stiffness of the third land portion 4C can be enhanced, and wear resistance of the tire 1 can be enhanced. From such a viewpoint, the maximum width W3 of the third land portion 4C is more preferably 2.5 or less times the maximum pitch P3 in the third land portion 4C.

Thus, the maximum width W3 of the third land portion 4C is preferably 1.4 to 3.0 times the maximum pitch P3 in the third land portion 4C, and more preferably 1.5 to 2.5 times the maximum pitch P3. Combination of the upper limit value and the lower limit value in these numerical value ranges can be discretionarily selected.

The sipe 5 preferably zigzags in the sipe depth direction, which is not shown. In the sipe 5 having such a configuration, wall surfaces can effectively support each other when a load is applied, and deformation of the land portion 4 can be inhibited, so that rolling resistance performance and wear resistance of the tire 1 can be enhanced.

FIG. 1 shows an example in which the sipe 5 linearly extends in the tire axial direction. However, the sipe 5 is not limited to such a configuration. For example, the sipe 5 may zigzag in the sipe longitudinal direction, the sipe 5 may be a 3D sipe that zigzags in the sipe longitudinal direction and the sipe depth direction, or different kinds of the sipes 5 may be mixed.

In the sipe 5 having such a configuration, wall surfaces can more effectively support each other when a load is applied, and deformation of the land portion 4 can be more assuredly inhibited, so that rolling resistance performance and wear resistance of the tire 1 can be further enhanced.

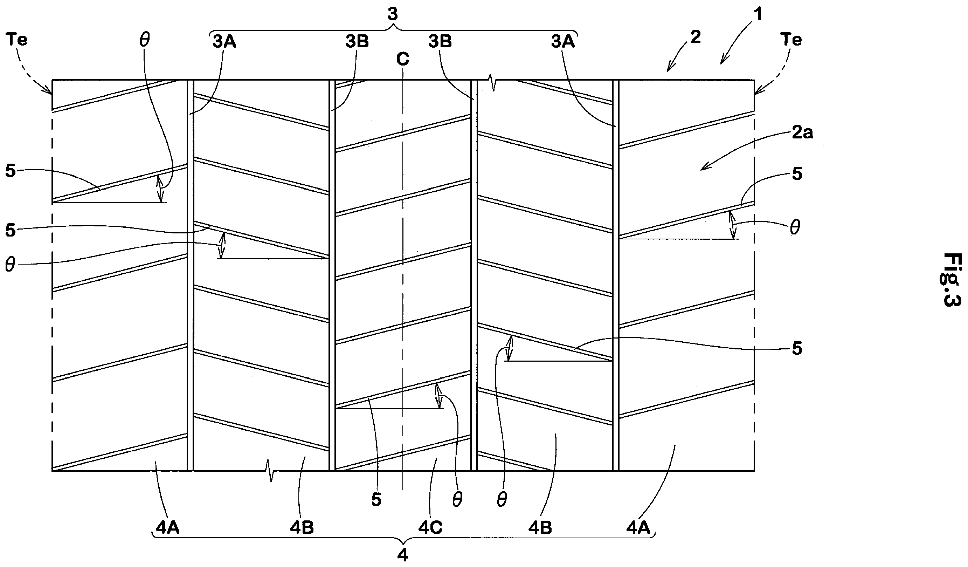

FIG. 3 is a tread development of the tread portion 2 according to another embodiment. As shown in FIG. 3, for example, the sipe 5 may be inclined relative to the tire axial direction. The sipe 5 having such a configuration allows water to smoothly flow and can thus promote drainage, so that wet performance of the tire 1 can be enhanced.

An angle θ of the sipe 5 relative to the tire axial direction is preferably 25° or less. In a case where the angle θ of the sipe 5 is 25° or less, the land portion 4 at the connection portion between the circumferential groove 3 and the sipe 5 is inhibited from having an acute angle, and local uneven wear or chipping can be reduced. From such a viewpoint, the angle θ of the sipe 5 is more preferably 20° or less. In a case where the sipe 5 is not linear, the angle θ of the sipe 5 is an angle θ of a straight line connecting between the start point of the sipe 5 and the end portion thereof.

The direction in which the sipe 5 of the first land portion 4A is inclined and the direction in which the sipe 5 of the second land portion 4B is inclined are preferably different from each other. In this embodiment, the direction in which the sipe 5 of the third land portion 4C is inclined is the same as the direction in which the sipe 5 of the first land portion 4A is inclined, and is different from the direction in which the sipe 5 of the second land portion 4B is inclined. The sipes 5 having such a configuration contribute to both enhancement of drainage performance and enhancement of noise performance of the tire 1.

FIG. 3 shows an example in which the sipes 5 in the plurality of the land portions 4 have the same angle θ. However, the present invention is not limited thereto. The angle θ of the sipe 5 may be different for each land portion 4. For example, the angle θ of the sipe 5 of the first land portion 4A may be less than the angle θ of the sipe 5 of each of the second land portion 4B and the third land portion 4C. The sipes 5 having such a configuration allow achievement of both reduction of uneven wear in the first land portion 4A in which uneven wear is likely to occur, and enhancement of drainage performance in the second land portion 4B and the third land portion 4C in which ground contact pressure is high.

For example, the sipe 5 extending in the tire axial direction and the sipe 5 extending in the tire axial direction so as to be inclined may be mixed. Such sipes 5 may be set as appropriate according to performance required for the tire 1.

As shown in FIG. 2, the maximum depth d1 of the sipe 5 in the tire radial direction is preferably 0.7 or more times the maximum groove depth d2 of the narrow groove portion 3a in the tire radial direction. In a case where the maximum depth d1 of the sipe 5 is 0.7 or more times the maximum groove depth d2 of the narrow groove portion 3a, the effect of the sipe 5 for enhancing drainage performance can be assuredly exhibited. From such a viewpoint, the maximum depth d1 of the sipe 5 is more preferably 0.85 or more times the maximum groove depth d2 of the narrow groove portion 3a.

The maximum depth d1 of the sipe 5 is preferably 1.3 or less times the maximum groove depth d2 of the narrow groove portion 3a. In a case where the maximum depth d1 of the sipe 5 is 1.3 or less times the maximum groove depth d2 of the narrow groove portion 3a, the land portion 4 can maintain good stiffness. From such a viewpoint, the maximum depth d1 of the sipe 5 is more preferably 1.15 or less times the maximum groove depth d2 of the narrow groove portion 3a.

Thus, the maximum depth d1 of the sipe 5 is preferably 0.7 to 1.3 times the maximum groove depth d2 of the narrow groove portion 3a and more preferably 0.85 to 1.15 times the maximum groove depth d2. Combination of the upper limit value and the lower limit value in these numerical value ranges can be discretionarily selected.

The maximum groove depth d2 of the narrow groove portion 3a is preferably 0.25 or more times the maximum groove depth d3 of the circumferential groove 3 in the tire radial direction. In a case where the maximum groove depth d2 of the narrow groove portion 3a is 0.25 or more times the maximum groove depth d3 of the circumferential groove 3, deformation of the land portion 4 during contact with the ground can be assuredly inhibited. From such a viewpoint, the maximum groove depth d2 of the narrow groove portion 3a is more preferably 0.30 or more times the maximum groove depth d3 of the circumferential groove 3.

The maximum groove depth d2 of the narrow groove portion 3a is preferably 0.70 or less times the maximum groove depth d3 of the circumferential groove 3. **In** a case where the maximum groove depth d2 of the narrow groove portion 3a is 0.70 or less times the maximum groove depth d3 of the circumferential groove 3, the volume of the wide portion 3b can be made large, and degradation of drainage performance at the late stage of wear can be assuredly inhibited. From such a viewpoint, the maximum groove depth d2 of the narrow groove portion 3a is more preferably 0.65 or less times the maximum groove depth d3 of the circumferential groove 3.

Thus, the maximum groove depth d2 of the narrow groove portion 3a is preferably 0.25 to 0.70 times the maximum groove depth d3 of the circumferential groove 3, and more preferably 0.30 to 0.65 times the maximum groove depth d3. Combination of the upper limit value and the lower limit value in these numerical value ranges can be discretionarily selected.

The circumferential groove 3 preferably includes an inflection portion 3c having a single arc-like shape between the narrow groove portion 3a and the wide portion 3b. The circumferential groove 3 having such a configuration gently changes when the narrow groove portion 3a disappears due to wear and can reduce local uneven wear or chipping.

The maximum groove width wg2 of the wide portion 3b is preferably 2.5 or more times the minimum groove width wg1 of the narrow groove portion 3a. **In** a case where the maximum groove width wg2 of the wide portion 3b is 2.5 or more times the minimum groove width wg1 of the narrow groove portion 3a, the wide portion 3b having a sufficient volume can be assured, and degradation of drainage performance at the late stage of wear can be assuredly inhibited. From such a viewpoint, the maximum groove width wg2 of the wide portion 3b is more preferably 3.0 or more times the minimum groove width wg1 of the narrow groove portion 3a.

The maximum groove width wg2 of the wide portion 3b is preferably 7.0 or less times the minimum groove width wg1 of the narrow groove portion 3a. **In** a case where the maximum groove width wg2 of the wide portion 3b is 7.0 or less times the minimum groove width wg1 of the narrow groove portion 3a, the wide portion 3b is inhibited from being excessively increased, and the land portion 4 can maintain high stiffness. From such a viewpoint, the maximum groove width wg2 of the wide portion 3b is more preferably 5.0 or less times the minimum groove width wg1 of the narrow groove portion 3a.

Thus, the maximum groove width wg2 of the wide portion 3b is preferably 2.5 to 7.0 times the minimum groove width wg1 of the narrow groove portion 3a, and more preferably 3.0 to 5.0 times the minimum groove width wg1. Combination of the upper limit value and the lower limit value in these numerical value ranges can be discretionarily selected.

The minimum groove width wg1 of the narrow groove portion 3a is preferably 1.0 mm or more. **In** a case where the minimum groove width wg1 of the narrow groove portion 3a is 1.0 mm or more, drainage performance at the initial stage of wear can be enhanced. From such a viewpoint, the minimum groove width wg1 of the narrow groove portion 3a is more preferably 1.5 mm or more.

The minimum groove width wg1 of the narrow groove portion 3a is preferably 3.0 mm or less. **In** a case where the minimum groove width wg1 of the narrow groove portion 3a is 3.0 mm or less, deformation of the land portion 4 during contact with the ground can be assuredly inhibited. From such a viewpoint, the minimum groove width wg1 of the narrow groove portion 3a is more preferably 2.5 mm or less.

Thus, the minimum groove width wg1 of the narrow groove portion 3a is preferably 1.0 to 3.0 mm and more preferably 1.5 to 2.5 mm. Combination of the upper limit value and the lower limit value in these numerical value ranges can be discretionarily selected.

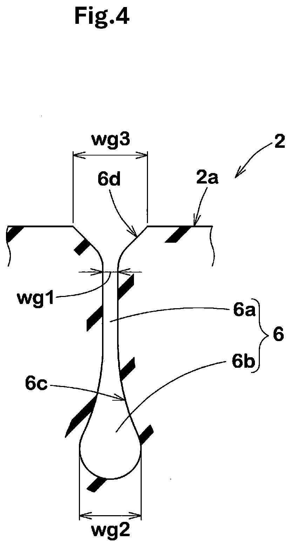

FIG. 4 is a cross-sectional view of a circumferential groove 6 according to a second embodiment. The same components as in the above-described embodiment are denoted by the same reference characters, and the description thereof is omitted. As shown in FIG. 4, the circumferential groove 6 of the second embodiment includes a narrow groove portion 6a having a small groove width on the outer side in the tire radial direction, and a wide portion 6b having a great groove width on the side inward of the narrow groove portion 6a in the tire radial direction, similarly to the circumferential groove 3 described above.

The circumferential groove 6 having such a configuration can inhibit deformation of the land portion 4 during contact with the ground since the land portions 4 adjacent to the narrow groove portion 6a come into contact with each other when a load is applied, so that rolling resistance performance and wear resistance of the tire 1 can be enhanced, similarly to the circumferential groove 3 described above. In the wide portion 6b, a groove width is increased at the late stage of wear, and the wide portion 6b thus inhibits degradation of drainage performance at the late stage of wear, and contributes to enhancement of wet performance of the tire 1.

The circumferential groove 6 preferably includes an inflection portion 6c having a single arc-like shape between the narrow groove portion 6a and the wide portion 6b, similarly to the circumferential groove 3 described above. The circumferential groove 6 having such a configuration gently changes when the narrow groove portion 6a disappears due to wear and can reduce local uneven wear or chipping, similarly to the circumferential groove 3 described above.

The circumferential groove 6 of the second embodiment includes a chamfered portion 6d extending from the ground contact surface 2a so as to be tapered on the outer side of the narrow groove portion 6a in the tire radial direction. The circumferential groove 6 having such a configuration can enhance drainage performance at the initial stage of wear without reducing stiffness of the land portion 4, and can enhance wet performance of the tire 1.

In the circumferential groove 6 of the second embodiment, the opening width wg3 of the chamfered portion 6d is greater than the maximum groove width wg2 of the wide portion 6b. The chamfered portion 6d having such a configuration can more assuredly enhance drainage performance at the initial stage of wear.

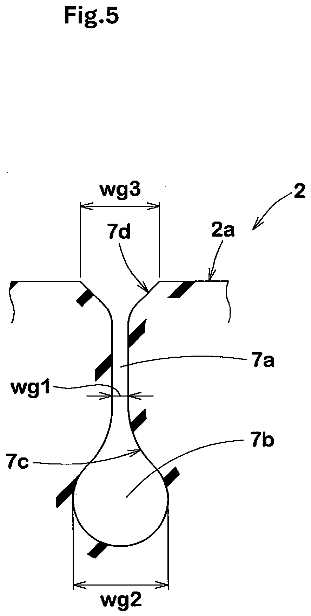

FIG. 5 is a cross-sectional view of a circumferential groove 7 according to a third embodiment. The same components as in the above-described embodiments are denoted by the same reference characters, and the description thereof is omitted. As shown in FIG. 5, the circumferential groove 7 of the third embodiment includes a narrow groove portion 7a having a small groove width on the outer side in the tire radial direction, and a wide portion 7b having a great groove width on the side inward of the narrow groove portion 7a in the tire radial direction, similarly to the circumferential groove 6 described above.

The circumferential groove 7 having such a configuration can inhibit deformation of the land portion 4 during contact with the ground since the land portions 4 adjacent to the narrow groove portion 7a come into contact with each other when a load is applied, so that rolling resistance performance and wear resistance of the tire 1 can be enhanced, similarly to the circumferential groove 6 described above. In the wide portion 7b, a groove width is increased at the late stage of wear, and the wide portion 7b thus inhibits degradation of drainage performance at the late stage of wear, and contributes to enhancement of wet performance of the tire 1.

The circumferential groove 7 of the third embodiment includes an inflection portion 7c between the narrow groove portion 7a and the wide portion 7b, and a chamfered portion 7d extending from the ground contact surface 2a so as to be tapered on the outer side of the narrow groove portion 7a in the tire radial direction, similarly to the circumferential groove 6 described above. The circumferential groove 7 having such a configuration can reduce local uneven wear or chipping and also enhance drainage performance at the initial stage of wear, similarly to the circumferential groove 6 described above.

In the circumferential groove 7 of the third embodiment, the maximum groove width wg2 of the wide portion 7b is greater than the opening width wg3 of the chamfered portion 7d. The wide portion 7b having such a configuration can more assuredly enhance drainage performance at the late stage of wear.

Although the particularly preferable embodiments of the present invention have been described above in detail, the present invention is not limited to the above-described embodiments, and various modifications can be made to implement the present invention.

### [Additional notes]

The present invention is as follows.

### [Present invention 1]

A tire including
a tread portion, wherein
the tread portion has a plurality of circumferential grooves extending in a tire circumferential direction, and a plurality of land portions demarcated by the plurality of circumferential grooves,
at least one of the plurality of circumferential grooves includes a narrow groove portion having a small groove width on an outer side in a tire radial direction, and a wide portion in which the groove width is great, on a side inward of the narrow groove portion in the tire radial direction,
the plurality of land portions include a first land portion disposed on an outermost side in a tire axial direction, and a second land portion disposed inward of the first land portion in the tire axial direction,
the first land portion and the second land portion each have a plurality of sipes extending across the first land portion and the second land portion, respectively, and
a maximum pitch in the tire circumferential direction between the sipes adjacent to each other in the tire circumferential direction in the second land portion is less than a maximum pitch in the tire circumferential direction between the sipes adjacent to each other in the tire circumferential direction in the first land portion.

### [Present invention 2]

The tire according to the present invention 1, wherein a maximum width of the second land portion in the tire axial direction is 1.4 to 3.0 times the maximum pitch in the second land portion.

### [Present invention 3]

The tire according to the present invention 1 or 2, wherein a maximum width of the first land portion in the tire axial direction is 1.0 to 3.0 times the maximum pitch in the first land portion.

### [Present invention 4]

The tire according to any one of the present inventions 1 to 3, wherein a maximum depth of each of the sipes in the tire radial direction is 0.7 to 1.3 times a maximum groove depth of the narrow groove portion in the tire radial direction.

### [Present invention 5]

The tire according to any one of the present inventions 1 to 4, wherein each of the sipes zigzags in a sipe depth direction.

### [Present invention 6]

The tire according to any one of the present inventions 1 to 5, wherein each of the sipes zigzags in a sipe longitudinal direction.

### [Present invention 7]

The tire according to any one of the present inventions 1 to 6, wherein each of the sipes is inclined relative to the tire axial direction at an angle of 25° or less.

### [Present invention 8]

The tire according to any one of the present inventions 1 to 7, wherein a maximum groove width of the wide portion is 2.5 to 7.0 times a minimum groove width of the narrow groove portion.

### [Present invention 9]

The tire according to any one of the present inventions 1 to 8, wherein the circumferential grooves each including the narrow groove portion and the wide portion each include an inflection portion having a single arc-like shape between the narrow groove portion and the wide portion.

### [Present invention 10]

The tire according to any one of the present inventions 1 to 9, wherein the circumferential grooves each including the narrow groove portion and the wide portion each include a chamfered portion extending from a ground contact surface so as to be tapered on an outer side of the narrow groove portion in the tire radial direction.

## Claims

1. A tire (1) comprising
a tread portion (2), wherein
the tread portion (2) has a plurality of circumferential grooves (3) extending in a tire circumferential direction, and a plurality of land portions (4) demarcated by the plurality of circumferential grooves (3),
at least one of the plurality of circumferential grooves (3) includes a narrow groove portion (3a) having a small groove width on an outer side in a tire radial direction, and a wide portion (3b) in which the groove width is great, on a side inward of the narrow groove portion (3a) in the tire radial direction,
the plurality of land portions (4) include a first land portion (4A) disposed on an outermost side in a tire axial direction, and a second land portion (4B) disposed inward of the first land portion (4A) in the tire axial direction,
the first land portion (4A) and the second land portion (4B) each have a plurality of sipes (5) extending across the first land portion (4A) and the second land portion (4B), respectively, and
a maximum pitch (P2) in the tire circumferential direction between the sipes (5) adjacent to each other in the tire circumferential direction in the second land portion (4B) is less than a maximum pitch (P1) in the tire circumferential direction between the sipes (5) adjacent to each other in the tire circumferential direction in the first land portion (4A).

2. The tire (1) according to claim 1, wherein a maximum width (W2) of the second land portion (4B) in the tire axial direction is 1.4 to 3.0 times the maximum pitch (P2) in the second land portion (4B).

3. The tire (1) according to claim 1 or 2, wherein a maximum width (W1) of the first land portion (4A) in the tire axial direction is 1.0 to 3.0 times the maximum pitch (P1) in the first land portion (4A).

4. The tire (1) according to any one of claims 1 to 3, wherein a maximum depth (d1) of each of the sipes (5) in the tire radial direction is 0.7 to 1.3 times a maximum groove depth (d2) of the narrow groove portion (3a) in the tire radial direction.

5. The tire (1) according to any one of claims 1 to 4, wherein each of the sipes (5) zigzags in a sipe depth direction.

6. The tire (1) according to any one of claims 1 to 5, wherein each of the sipes (5) zigzags in a sipe longitudinal direction.

7. The tire (1) according to any one of claims 1 to 6, wherein each of the sipes (5) is inclined relative to the tire axial direction at an angle θ of 25° or less.

8. The tire (1) according to any one of claims 1 to 7, wherein a maximum groove width (wg2) of the wide portion (3b) is 2.5 to 7.0 times a minimum groove width (wg1) of the narrow groove portion (3a).

9. The tire (1) according to any one of claims 1 to 8, wherein the circumferential grooves (3, 6, 7) each including the narrow groove portion (3a, 6a, 7a) and the wide portion (3b, 6b, 7b) each include an inflection portion (3c, 6c, 7c) having a single arc-like shape between the narrow groove portion (3a, 6a, 7a) and the wide portion (3b, 6b, 7b).

10. The tire (1) according to any one of claims 1 to 9, wherein the circumferential grooves (6, 7) each including the narrow groove portion (6a, 7a) and the wide portion (6b, 7b) each include a chamfered portion (6d, 7d) extending from a ground contact surface (2a) so as to be tapered on an outer side of the narrow groove portion (6a, 7a) in the tire radial direction.
